# EUROPEAN PATENT SPECIFICATION

(11) **EP 1 826 118 B1**
(45) Date of publication and mention of the grant of the patent: **13.08.2014**
(21) Application number: 06425113.5
(22) Date of filing: 24.02.2006
(51) Int. Cl.: B63H 25/24, B63B 39/06, G05D 1/00

(54) **Autopilot assembly for a naval unit**
Autopilotanordnung für ein Wasserfahrzeug
Ensemble de pilotage automatique pour une embarcation

(43) Date of publication of application: 29.08.2007
(73) Proprietor: GE Avio S.r.l., Rivalta di Torino (Torino) (IT)
(72) Inventor: Busti, Paolo, 10040 Druento (IT); Quaglia, Dario, 10126 Torino (IT)
(74) Representative: Cerbaro, Elena

(56) References cited:
- EP-A- 0 268 041
- EP-A- 1 510 453
- WO-A-2005/102833
- US-A- 3 722 367
- US-A- 3 799 096
- US-A- 4 765 568
- US-A- 6 026 759
- US-B1- 6 273 771

## Description

The present invention relates to an autopilot assembly for a naval unit or means.

As known, naval units in general are provided with one or more directional or stabiliser members arranged in different positions according to the type of naval unit, and normally associated to either the bow or stern portion, or to both portions. Each directional or stabiliser member turns about its own hinge axis under the bias of a respective hydraulic actuator controlled by an electrohydraulic valve unit, as disclosed, for example, in US 6, 273, 771.

The known electrohydraulic valve assemblies are controlled by a centralised autopilot assembly common to all valve assemblies, generally of the insertable card type. The autopilot assembly is arranged on the floor, concentrated in a median zone of the naval unit, and is connected by means of appropriate electrical wirings to the various electrohydraulic valve assemblies. A control console provided with manual control and monitoring devices for the human/machine interface manoeuvres is also envisaged and arranged in the same median zone of the naval unit, as disclosed for example in US 6,273,771.

The known autopilot assemblies of the type described above have a series of drawbacks, all consequent to their centralised arrangement. Such configuration, on one hand allows to localise the control "intelligence" of the entire naval unit in a median zone of the naval means, but on the other hand requires the availability of large housing spaces and, in particular, of extended resting areas on the floor. Although such spaces and resting areas may be envisaged in some types of naval units despite considerable difficulties and inevitable compromises, these are difficult to obtain in other types of naval units, in which the optimal distribution of spaces is one of the main, most ambitious objectives and often the most difficult to reach.

Furthermore, the large dimensions of the known autopilot assemblies and their traditional parallelepiped shape, similar to that of common office cabinets, make the so-called "re-fitting" operations, i.e. reinstallation of new-generation apparatuses in naval means in service to replace those in use which have become obsolete, particularly difficult and often impossible.

The particular type and arrangement of the known autopilot assemblies also requires the use of considerable electrical wiring bundles for connecting to the electrohydraulic valve assemblies and to the control console. Such electrical wiring bundles inevitably extend for the entire length of the naval means occupying considerable spaces and increasing the weight of the naval means itself.

The known autopilot assemblies are not completely satisfactory even from a safety point of view, since all directional or stabiliser members could become simultaneously uncontrollable in the event of damage in the central unit area, with imaginable consequences for naval unit management.

It is the object of the present invention to make an autopilot assembly for naval units or means, whose features allow to simply and cost-effectively solve the problems presented above.

According to the present invention it is realized an autopilot assembly for a naval unit comprising at least one directional or stabiliser unit turning about at least one hinge axis, an electrohydraulic unit arranged near said directional or stabiliser member for turning the directional or stabiliser member about said hinge axis; the autopilot assembly presents a distributed architecture and comprises at least one electronic control unit dedicated to said electrohydraulic unit and accommodated near said electrohydraulic unit.

The autopilot assembly for naval unit further comprises at least one further directional or stabiliser member and a further electrohydraulic unit dedicated to and arranged near said further directional or stabiliser member, and it comprises a further electronic control unit of said further electrohydraulic unit; said electronic control units being separate and reciprocally independent and each accommodated near the respective electrohydraulic unit.

The invention will now be described with reference to the accompanying drawings illustrating a non-limitative embodiment example thereof, in which:
figure 1 schematically and partially shows a naval unit provided with a first preferred embodiment of the autopilot assembly according to the present invention;
figure 2 shows another naval unit provided with a second preferred embodiment of the autopilot assembly according to the present invention;
figure 3 shows on a highly enlarged scale a detail of the autopilot assembly of figures 1 and 2; and
figure 4 shows a variant of the assembly in figure 3.

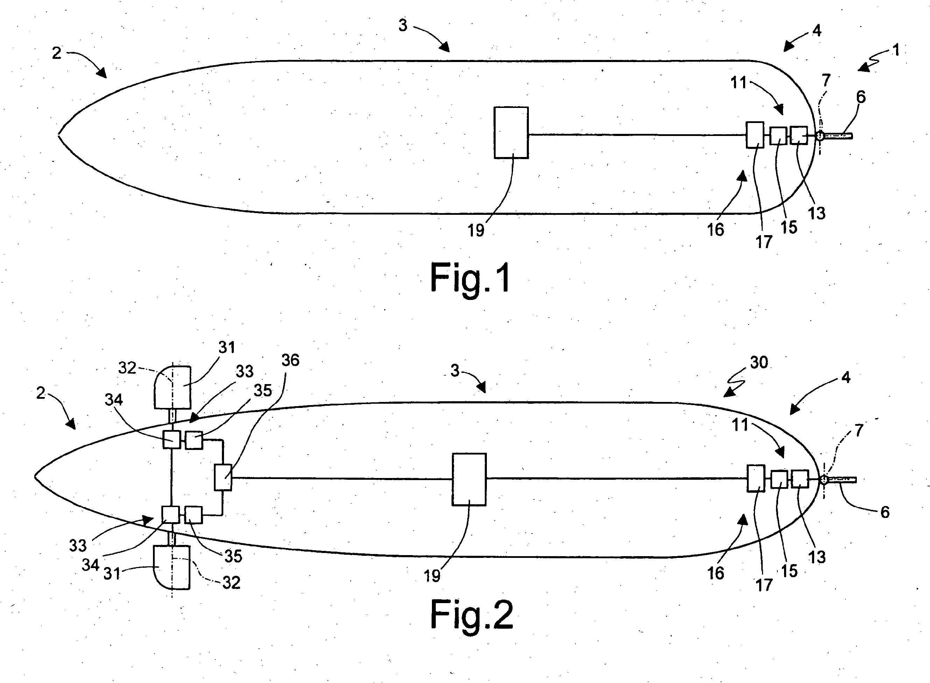

In figure 1, it is indicated as a whole by 1 a naval unit or means presenting a bow portion 2, an intermediate portion 3 and a stern portion 4. The stern portion 4 is coupled to a directional member or rudder 6 turning about an axis 7.

The rudder 6 is controlled by an electrohydraulic unit, indicated by 11, accommodated in the stern portion 4 in a position adjacent to the rudder 6 to turn the rudder 6 itself about the axis 7. The electrohydraulic unit 11 comprises a hydraulic actuator 13 and a respective proportioning valve or servovalve assembly 15 controlling the hydraulic actuator 13 itself.

The valve assembly 15 is in turn controlled by a autopilot unit 16 presenting a distributed architecture and comprising a specifically dedicated electronic control unit 17 which represents the "intelligence" of the rudder control 6. The electronic unit 17 presents a flat parallelepiped shape with dimensions in the order of 300x220x80 millimetres, and is accommodated within the stern portion 4 near the electrohydraulic unit 15 and, therefore, also near the rudder 6.

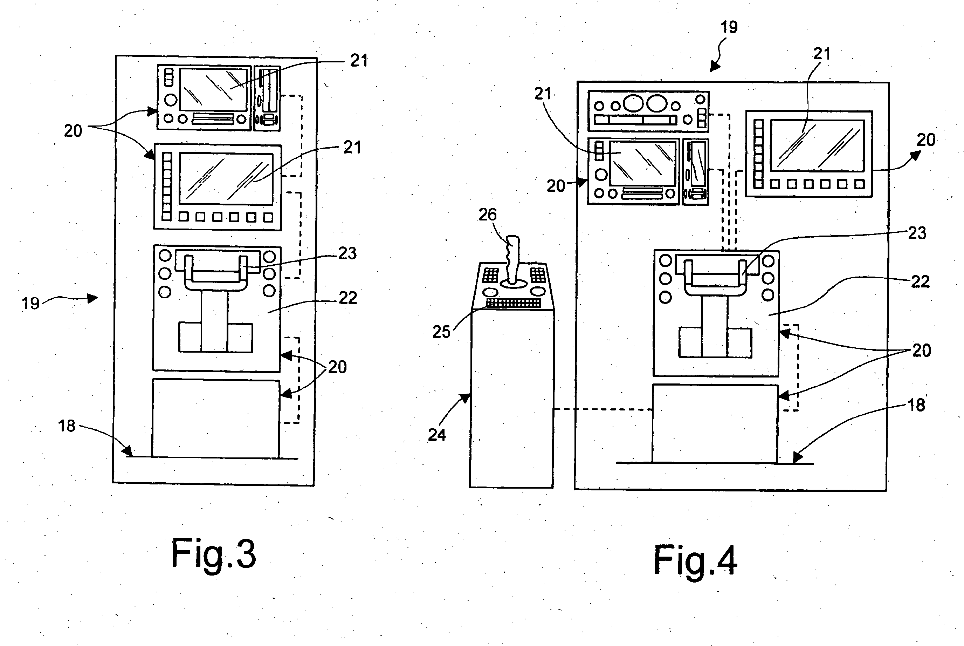

In the case of the described detail, the electronic control unit 17 is spaced away from an internal floor surface 18 (figures 3 and 4) for the occupants of the naval unit and, more precisely, is arranged in raised position with respect to the internal floor surface 18 itself.

Again with reference to the accompanying figures, the autopilot assembly 16 further comprises the human-machine interface unit 19 accommodated in intermediate position 3, and therefore in remote position with respect to the electronic control unit 17. In the example shown, the interface unit 19 is connected to the electronic unit 17 to send electrical driving signals and receive rudder position signals in reply.

According to a variant (not shown), the autopilot assembly 16 further comprises a pair of electronic units 17, which are connected in parallel to the electrohydraulic unit 15 and to the interface unit 19 to make a redundant control system.

With reference to figure 3, the interface unit 19 presents a modular distributed architecture and comprises a plurality of modular elements or modules 20, two of which formed by shields 21. These modules may be stacked one on the other, as shown in figure 3, or arranged side-by-side, as shown in figure 4, or even be separated, arranged and connected in the most convenient way, according to the available space aboard the naval unit. A third module, indicated with 22, is a manoeuvre module provide with handwheel or cloche 23. This module may also be arranged in different positions from that shown in the accompanying figures according to the operator's needs and may be either installed with or replaced by an additional or optional manoeuvre module indicated by number 24 comprising a keyboard 25 and a joystick 26 and electrically connected by means of a wiring harness or other electrical system to be moved to remote position with respect to the other modules 20 or to any other position chosen by the operator.

Figure 2 shows a naval unit 30, which differs from unit 1 for some manufacturing details and whose constituent parts are distinguished, where possible, by the same reference numbers as the corresponding parts of the naval unit 1.

The naval unit 30, in addition to the rudder 6, comprises two further directional or stabiliser members, intrinsically known, indicated by 31 and arranged on opposite sides of the bow portion 2 to turn about respective axes 32. The members 31 are controlled by respective electrohydraulic units indicated by 33 and accommodated in bow portion 2 next to the respective members 31 to turn the members 31 themselves about the respective axes 32. As unit 11, each electrohydraulic unit 33 comprises its own hydraulic actuator 34 and a respective proportioning valve or servovalve assembly 35 controlling the hydraulic actuator 34.

In naval unit 30, the autopilot assembly 16 further comprises a further electronic control unit 36 which in the particular example shown is constructively and dimensionally equivalent to the control unit 17. The control unit 36 is separated and independent from the electronic unit 17, and as shown in figure 2, is also arranged next to the respective electrohydraulic units and in remote position with respect to the interface unit 19, to which is electrically connected in the same way as electronic unit 17.

According to a variant (not shown), the naval unit 30 comprises at least a further directional member, which is arranged near the directional member 6 and is operated by a respective electrohydraulic unit also controlled by an electrohydraulic unit similar or equivalent to the units 17 and 36 to turn about an axis orthogonal to axis 7. The latter electronic unit is independent from the other electronic units 17 and 36 and is also electrically connected to the interface unit 19.

According to that shown again in figure 2, in the naval unit 30, the autopilot assembly 16 comprises two electronic units 36 both connected in parallel to the electrohydraulic unit 33 to make a further redundant control.

In use, each of the electronic units, for the fact of being an independent unit which encloses the intelligence for controlling the respective directional or stabiliser member, controls the respective directional or stabiliser member independently from the other electronic units. The interface unit 19 coordinates the various electronic units sending only driving signals, conveniently in serial form, which are then converted into signals by the electronic units themselves which, later, send a simple feedback signal for informing the operator to the interface unit 19.

From the above, it is therefore apparent that with respect to the known solutions, all wirings which extended from the intermediate portion 3 towards the bow or stern portions according to the arrangement of the directional or stabiliser members are considerably reduced and in some cases practically eliminated, thus creating reusable spaces, and above all simplifying the installation, on-board testing and maintenance of the autopilot assembly.

Furthermore, the fact of envisaging single dedicated electronic units arranged near the rudders or the turning stabiliser units and therefore to the opposite axial ends of the naval unit considerably increases safety and global management of the naval means itself also in the event of damage. Indeed, damage which may concern one of the electronic units will not influence the other electronic units, which will therefore continue to perform their function allowing the management of the naval unit.

The use of evolved integrated systems, alternatively to the known solutions of the insertable card type, additionally allows to drastically reduce the dimensions of each on-board unit, and in particular of the electronic units reducing them to dimensions comparable to those of a common laptop computer, and therefore to accommodate the electronic units themselves in axial end zones, and in particular to connect them directly to the hull of the naval unit, distancing them in this way from the floor level, always very limited on-board.

The contained dimensions of the electronic units also allow not only the rapid removal and replacement in the event of a failure, but also convenient on-board storage of spare parts. The fact of having independent and reciprocally separated control zones both functionally and physically allows then to drastically cut troubleshooting times and therefore to rapidly intervene on the failed part.

The fact of envisaging a distributed architecture autopilot assembly and of transferring the control "intelligence" from the intermediate portion of the naval means to longitudinal end zones or zones away from the intermediate portion of the naval means allows to make a considerable space available in the intermediate portion itself, with respect to the known solutions, and therefore to reorganise the distribution of the various components of the human-machine interface, thus creating a distributed architecture control console, consequently more ergonomic and above all more versatile and reconfigurable, as shown by the accompanying figures by way of example.

From the above it is apparent that changes and variants can be made to the described naval units 1 and 3 and the control autopilot assembly 16 without departing from the protective scope defined by the claims.

## Claims

1. An autopilot assembly for a naval unit comprising at least one stern directional or stabiliser member (6) turning about at least one hinge axis (7); an electrohydraulic unit (13) arranged near said stern directional or stabiliser member (6) for turning the directional or stabiliser member about said hinge axis (7); and at least one electronic control unit (17) dedicated to said electrohydraulic unit (13) and accommodated near said electrohydraulic unit (13); the autopilot assembly being **characterised in that** it presents a distributed architecture and further comprises at least one bow direction or stabilizer member (31, 32); a further electrohydraulic unit (34) dedicated to and arranged near said bow directional or stabiliser member, and a further electronic control unit (36) dedicated to said further electrohydraulic unit (34) and accommodated near said further electrohydraulic unit (34); said electronic control unit (17) and said further electronic control unit (36) being separate and reciprocally independent unit.

2. An autopilot assembly according to, claim 1, **characterised in that** said electronic control units are reciprocally distanced.

3. An assembly according to claim 2, **characterised in that** said electronic control units are associated to opposite end portions of said naval unit.

4. An autopilot assembly according to any of the preceding claims, **characterised in that** it comprises for each of said electrohydraulic unit a respective pair of said electronic control units; the electronic control units of each pair of electronic units being connected in parallel to the respective electrohydraulic unit to make a redundant control system.

5. An autopilot assembly according to any of the preceding claims, **characterised in that** it further comprise a human-machine interface, and **in that** each of said electronic control units is arranged in remote position with respect to said human-machine interface and is connected to the interface unit to receive electrical driving signals and to send position control signals of said directional or stabiliser members in reply.

6. An autopilot assembly according to claim 5, **characterised in that** said human-machine interface is arranged in intermediate position between said electronic control units.

7. An autopilot assembly according to claim 6, characterised jn that said human-machine interface presents a modular distributed architecture and comprises modular elements available in relatively different positions to obtain different logistic configurations.

## Patentansprüche

1. Autopiloteinheit für eine Marineeinheit, die mindestens ein Heckrichtungs- oder Stabilisatorelement (6) aufweist, das um mindestens eine Drehachse (7) dreht, eine elektrohydraulische Einheit (13), die nahe des Heckrichtungs- oder Stabilisatorelements (6) eingerichtet ist, um das Richtungs- oder Stabilisatorelement um die Drehachse (7) zu drehen, und die mindestens eine elektronische Steuereinheit (17), die für die elektrohydraulische Einheit (13) bestimmt und nahe der elektrohydraulischen Einheit (13) untergebracht ist, wobei die Autopiloteinheit **dadurch gekennzeichnet ist, dass** sie eine dezentrale Architektur aufweist und ferner mindestens ein Bugrichtungs- oder Stabilisatorelement (31, 32) aufweist, eine weitere elektrohydraulische Einheit (34), die für das Bugrichtungs- und Stabilisatorelement und in seiner Nähe eingerichtet ist, und eine weitere elektronische Steuereinheit (36), die für die weitere elektrohydraulische Einheit (34) bestimmt und nahe der weiteren elektrohydraulischen Einheit (34) untergebracht ist, wobei die elektronische Steuereinheit (17) und die weitere elektronische Steuereinheit (36) getrennte und voneinander unabhängige Einheiten sind.

2. Autopiloteinheit nach Anspruch 1, **dadurch gekennzeichnet, dass** die elektronischen Steuereinheiten voneinander beabstandet sind.

3. Einheit nach Anspruch 2, **dadurch gekennzeichnet, dass** die elektronischen Steuereinheiten zu gegenüberliegenden Endteilen der Marineeinheit gehören.

4. Autopiloteinheit nach einem der vorhergehenden Ansprüche, **dadurch gekennzeichnet, dass** sie für jede elektrohydraulische Einheit ein jeweiliges Paar der elektronischen Steuereinheiten aufweist, wobei die elektronischen Steuereinheiten jedes Paars elektronischer Steuereinheiten mit der jeweiligen elektrohydraulischen Einheit parallel geschaltet sind, um ein redundantes Steuersystem zu ergeben.

5. Autopiloteinheit nach einem der vorhergehenden Ansprüche, **dadurch gekennzeichnet, dass** sie ferner eine Mensch-Maschinen-Schnittstelle aufweist, und dass jede der elektronischen Steuereinheiten in entfernter Position in Bezug auf die Mensch-Maschinen-Schnittstelle eingerichtet und mit dieser Schnittstelleneinheiten verbunden ist, um elektrische Antriebssignale zu empfangen und Positionssteuersignale der Richtungs- oder Stabilisatorelemente als Antwort zu senden.

6. Autopiloteinheit nach Anspruch 5, **dadurch gekennzeichnet, dass** die Mensch-Maschinen-Schnittstelle in Zwischenposition zwischen den elektronischen Steuereinheiten eingerichtet ist.

7. Autopiloteinheit nach Anspruch 6, **dadurch gekennzeichnet, dass** die Mensch-Maschinenschnittstelle eine modulare dezentrale Architektur aufweist und modulare Elemente aufweist, die in relativ unterschiedlichen Positionen verfügbar sind, um unterschiedliche logistische Konfigurationen zu erzielen.

## Revendications

1. Ensemble de pilotage automatique pour une unité navale comprenant au moins un élément directionnel ou stabilisateur de poupe (6) tournant autour d'au moins un axe de charnière (7) ; une unité électro-hydraulique (13) agencée à proximité dudit élément directionnel de poupe ou stabilisateur (6) pour faire tourner l'élément directionnel ou stabilisateur autour dudit axe de charnière (7) ; et au moins une unité de commande électronique (17) dédiée à ladite unité électro-hydraulique (13) et logée à proximité de ladite unité électro-hydraulique (13) ; l'ensemble de pilotage automatique étant **caractérisé en ce qu'**il présente une architecture distribuée et comprend en outre au moins un élément directionnel ou stabilisateur de proue (31 ; 32) ; une autre unité électro-hydraulique (34) dédiée à et agencée à proximité dudit élément directionnel ou stabilisateur de proue, et une autre unité de commande électronique (36) dédiée à ladite autre unité électro-hydraulique (34) et logée à proximité de ladite autre unité électro-hydraulique (34) ; ladite unité de commande électronique (17) et ladite autre unité de commande électronique (36) étant une unité séparée et réciproquement indépendante.

2. Ensemble de pilotage automatique selon la revendication 1, **caractérisé en ce que** lesdites unités de commande électroniques sont réciproquement à distance.

3. Ensemble de pilotage automatique selon la revendication 2, **caractérisé en ce que** lesdites unités de commande électroniques sont associées aux parties d'extrémité opposées à ladite unité navale.

4. Ensemble de pilotage automatique selon l'une quelconque des revendications précédentes, **caractérisé en ce qu'**il comprend pour chacune desdites unités électro-hydrauliques, une paire respective desdites unités de commande électroniques ; les unités de commande électroniques étant raccordées en parallèle à l'unité électro-hydraulique respective pour réaliser un système de commande redondant.

5. Ensemble de pilotage automatique selon l'une quelconque des revendications précédentes, **caractérisé en ce qu'**il comprend en outre une interface homme-machine, et **en ce que** chacune desdites unités de commande électroniques est agencée en position à distance par rapport à ladite interface homme-machine et est raccordée à l'unité d'interface pour recevoir des signaux d'entraînement électriques et pour envoyer des signaux de commande de position desdits éléments directionnels ou stabilisateurs en réponse.

6. Ensemble de pilotage automatique selon la revendication 5, **caractérisé en ce que** ladite interface homme-machine est agencée en position intermédiaire entre lesdites unités de commande électroniques.

7. Ensemble de pilotage automatique selon la revendication 6, **caractérisé en ce que** ladite interface homme-machine présente une architecture distribuée modulaire et comprend des éléments modulaires disponibles dans des positions relativement différentes pour obtenir différentes configurations logistiques.
